# EUROPÄISCHE PATENTSCHRIFT

(11) **EP 2 078 621 B1**
(45) Veröffentlichungstag und Bekanntmachung des Hinweises auf die Patenterteilung: **27.02.2013**
(21) Anmeldenummer: 09000363.3
(22) Anmeldetag: 13.01.2009
(51) Int. Cl.: B60B 33/00, B66F 9/075

(54) **Fahrzeug, insbesondere Flurförderzeug, mit Befestigungsanordnung für ein Laufrad**
Vehicle, in particular industrial truck, with attachment assembly for a rotor
Véhicule, notamment chariot de manutention, doté d'un agencement de fixation pour une roue porteuse

(30) Priorität: 14.01.2008 DE 102008004270
(43) Veröffentlichungstag der Anmeldung: 15.07.2009
(73) Patentinhaber: Jungheinrich Aktiengesellschaft, 22047 Hamburg (DE)
(72) Erfinder: Bergmeier, Stefan, 85465 Langenpreising (DE); Schöttke, Carsten, 85368 Moosburg (DE)
(74) Vertreter: Tiesmeyer, Johannes

(56) Entgegenhaltungen:
- EP-A- 0 743 199
- DE-A1- 4 309 561
- DE-U1- 9 412 537
- US-A- 2 285 656
- US-A- 3 015 838

## Beschreibung

Die vorliegende Erfindung betrifft ein Fahrzeug, insbesondere Flurförderzeug, mit wenigstens einem nicht angetriebenen Laufrad, das zwischen einem äußeren und einem inneren Rahmenabschnitt des Fahrzeugs um eine bezüglich dieser Rahmenabschnitte abgestützte Achse drehbar ist, wobei die Achse bezüglich der Rahmenabschnitte drehfest und axial unverschieblich angeordnet ist, und wobei das Laufrad eine Radlageranordnung aufweist, die im Wesentlichen spielfrei auf der Achse derart angeordnet ist, dass das Laufrad mit einem jeweiligen Abstand in axialer Richtung zu den Rahmenabschnitten angeordnet ist, wobei die Radlageranordnung zwischen einem an einem Ende der Achse ausgebildeten Radialvorsprung und einer am anderen Ende der Achse angebrachten Befestigungsanordnung eingespannt ist.

Die Befestigung nicht angetriebener Laufräder an Fahrzeugen kann auf unterschiedliche Weise erfolgen. Eine Möglichkeit ist die Aufnahme des Laufrades mittels einer steckbaren Achse, welche beidseitig in entsprechenden Aufnahmebohrungen radial gelagert ist. Zusätzlich ist eine axiale Fixierung der Achse erforderlich. Gemäß einer bekannten Ausführungsform wird die Achse an einem Ende mit Hilfe eines Blechteiles mit dem Fahrzeugrahmen mittels drei Schrauben verbunden. Eine derartige Verbindung verhindert sowohl die Rotation der Achse als auch die axiale Bewegung der Achse. Allerdings wird die ebenfalls erforderliche spielfreie bzw. spielarme Fixierung des Rades auf der Achse durch aufwendig zu montierende Ausgleichsscheiben realisiert, die in axialer Richtung auf beiden Seiten des Rades auf der Achse angeordnet werden müssen.

Eine gattungsgemäße Befestigungsanordnung ist aus der EP 0743199 A bekannt.

Aufgabe der Erfindung ist es, die Montage einer Achse mit Laufrad an einem Fahrzeug, insbesondere Flurförderzeug, zu vereinfachen.

Bei einem Fahrzeug, bei dem die Radlageranordnung zwischen einem an einem Ende der Achse ausgebildeten Radialvorsprung und einer am anderen Ende der Achse angebrachten Befestigungsanordnung eingespannt ist, wird zur Lösung der Aufgabe erfindungsgemäß vorgeschlagen, dass die Befestigungsanordnung eine um das andere Ende der Achse konzentrisch angeordnete Buchse umfasst, wobei die Achse mittels der Buchse, der Radlageranordnung und dem Radialvorsprung in axialer Richtung bezüglich der Rahmenabschnitte unverschieblich gehalten ist.

Die Radlageranordnung steht dabei insbesondere in unmittelbarem Kontakt mit dem an der Achse ausgebildeten Radialvorsprung und einer dem Rad zugewandten radialen Ringfläche der Buchse, so dass beim Anbringen des Laufrades am Fahrzeug keine direkt an der Radlageranordnung des Rades anliegende Ausgleichsscheiben einzubauen sind, was die Montage vereinfacht und zu einer Zeitersparnis führt.

Damit die Buchse nur eine auf der Achse aufliegende innere Lagerschale der Radlageranordnung berührt, welche beim Drehen des Rades auf der Achse feststeht, wird vorgeschlagen, dass die Buchse einen konischen Abschnitt aufweist, der zur axialen Abstützung der Radlageranordnung eine Öffnung des Rahmenabschnittes durchsetzt, und dass sich die Buchse ferner an dem Rahmenabschnitt axial abstützt.

Dabei ist es bevorzugt, dass die Buchse fest mit dem Rahmenabschnitt verbunden ist, vorzugsweise mit diesem verschweißt ist. Die Buchse ist hierdurch gegen Axial- und Drehbewegungen gesichert. Selbstverständlich kann die Buchse auch mit dem Rahmenabschnitt verschraubt oder sonst in geeigneter Weise an diesem befestigt sein.

Bevorzugt weist die Buchse im Bereich des anderen, buchsenseitigen Endes der Achse eine stufenförmige radiale Aufweitung auf, derart, dass im Bereich der Aufweitung zwischen dem Außenumfang der Achse und dem Innenumfang der Buchse eine im Wesentlichen ringförmige Aufnahme gebildet ist. Hierzu wird weiter vorgeschlagen, dass die Buchse an ihrem Innenumfang im Bereich der Aufweitung wenigstens eine radial nach außen ausgebildete Ausnehmung aufweist, und dass ferner die Achse an ihrem buchsenseitigen Ende wenigstens einen abgeflachten, vorzugsweise ebenen Außenumfangsabschnitt aufweist.

Die zwischen dem Außenumfang der Achse und dem Innenumfang der Buchse im Bereich der Aufweitung ausgebildete ringförmige Aufnahme weist somit eine von einem Kreis abweichende Innen- bzw. Außenkontur auf, wobei die in der Buchse ausgebildete Ausnehmung und der abgeflachte Außenumfangsabschnitt der Achse in radialer Richtung einander bevorzugt zugewandt sind.

Der abgeflachte Außenumfangsabschnitt der Achse ist in axialer Richtung so ausgebildet, dass er im Wesentlichen nur im Bereich der Aufweitung der Buchse liegt, so dass die Achse in axialer Richtung weg von der Buchse zum Rad hin eine kreisförmige Außenkontur aufweist.

Die Befestigungsanordnung weist zwecks Anpassung der spielarmen bzw. spielfreien Fixierung des Rades bevorzugt wenigstens ein zum Innenumfang der Buchse und zum Außenumfang der Achse komplementäres scheibenförmiges Ringelement auf, das in die ringförmige Aufnahme eingesetzt ist. Dabei wird insbesondere vorgeschlagen, dass das Ringelement an seinem Außenumfang wenigstens einen radialen Vorsprung aufweist, der in Eingriff mit der wenigstens einen radialen Ausnehmung am Innenumfang der Buchse ist, und dass es an seinem Innenumfang einen abgeflachten Drehsicherungsabschnitt aufweist, der am abgeflachten, vorzugsweise ebenen Außenumfangsabschnitt der Achse anliegt.

Das Ringelement stellt somit eine drehfeste Verbindung zwischen der Achse und der Buchse her, da eine Drehbewegung der Achse über den abgeflachten Außenumfangsabschnitt, den abgeflachten Drehsicherungsabschnitt des Ringelements, den radialen Vorsprung des Ringelements und die radiale Ausnehmung in der Buchse abgestützt ist. In die zwischen Achse und Buchse ausgebildete ringförmige Aufnahme können mehrere Ringelemente eingesetzt werden, so dass ggf. Fertigungstoleranzen der verschiedenen Bauteile beim Montieren des Laufrades am Fahrzeug ausgeglichen werden können. Dabei erfolgt der Spielausgleich mittels der Ringelemente nur an einem Ende der Achse und außerhalb des Zwischenraums, in den das Rad zwischen den Rahmenabschnitten eingesetzt ist. Somit ist das Einfügen der Ringelemente in einen leicht zugänglichen Bereich verlagert und die Montage wird hierdurch vereinfacht.

Um die Verspannung der Radlageranordnung zwischen dem an der Achse ausgebildeten Radialvorsprung und der Buchse herzustellen, wird vorgeschlagen, dass die Buchse und die Achse mittels einer Schraubverbindung der Befestigungsanordnung aneinander befestigt sind. Dabei ist es besonders bevorzugt, dass die Schraubverbindung eine die Achse mit der Buchse und dem wenigstens einen Ringelement verbindende Schraube umfasst, die in eine vorzugsweise konzentrische Axialbohrung am buchsenseitigen Ende der Achse eingeführt ist. Dabei umfasst die Axialbohrung in der Regel ein Innengewinde, in das die Schraube eingedreht werden kann. Allerdings ist auch denkbar, dass an der Achse ein vorzugsweise konzentrisch ausgebildeter Bolzen mit Außengewinde vorgesehen ist und die Buchse mittels einer Mutter an diesem Bolzen verschraubt wird.

Für eine optimale Spannwirkung der Schraubverbindung wird vorgeschlagen, dass die Befestigungsanordnung eine Druckscheibe umfasst, die axial zwischen der Buchse und dem Schraubenkopf der Schraube angeordnet ist und durch welche die axiale Abstützung des wenigstens einen Ringelements erfolgt. Dabei übt die Druckscheibe in einem Fall eine axiale Kraft sowohl auf die buchsenseitige Stirnfläche der Achse als auch auf ein zu dieser Stirnfläche bündig angeordnetes Ringelement aus. In einem anderen Fall steht die Druckscheibe nur mit einem in axialer Richtung etwas über die buchsenseitige Stirnfläche der Achse vorstehenden Ringelement in Kontakt, ohne dass hierdurch die axiale Unverschieblichkeit der Achse beeinträchtigt ist, da die Achse axial fixiert ist über den Formschluss Schraube, Druckscheibe, Ringelement und am Rahmenabschnitt befestigte Buchse.

Die Achse ist mit ihrem radialen Vorsprung vorzugsweise in einer korrespondierenden Öffnung in einem der Rahmenabschnitte aufgenommen, wobei die axiale Ausdehnung des Vorsprungs derart gewählt ist, dass sie größer ist als die axiale Dicke des betreffenden Rahmenabschnitts, in dem der Vorsprung aufgenommen ist. Hierdurch wird das Rad mit einem Abstand zum betreffenden Rahmenabschnitt am radialen Vorsprung der Achse abgestützt.

Der radiale Vorsprung kann mit der vom Laufrad abgewandten Außenseite des betreffenden, vorzugsweise äußeren Rahmenabschnitts im Wesentlichen bündig sein, so dass der äußere Rahmenabschnitt und eine äußere Stirnseite der Achse bzw. des radialen Vorsprungs zusammen eine glatte Außenkontur des Fahrzeugs bilden.

Die Radlageranordnung umfasst vorzugsweise ein erstes, am radialen Vorsprung der Achse anliegendes Radlager und ein zweites an der Buchse anliegendes Radlager, zwischen denen in axialer Richtung eine konzentrische Distanzbuchse angeordnet ist. Dabei sind die beiden Radlager vorzugsweise als Kugellager ausgebildet, die jeweils eine bezüglich der Achse drehfest gelagerte innere Lagerschale aufweisen und eine bezüglich der Achse drehbare äußere Lagerschale. Die Distanzbuchse erstreckt sich in axialer Richtung zwischen den beiden inneren Lagerschalen, so dass die beim Verspannen der Radlageranordnung zwischen radialem Vorsprung der Achse und der Buchse auftretenden Axialkräfte durch die Radlageranordnung aufgenommen werden können.

Gemäß einem weiteren Aspekt betrifft die Erfindung eine Befestigungsanordnung für ein nicht angetriebenes Laufrad an einem Fahrzeug, vorzugsweise Flurförderzeug, wobei die Befestigungsanordnung eine in eine Radlageranordnung des Laufrads einführbare Achse und Befestigungsmittel umfasst, durch welche die Achse axial unverschieblich am Fahrzeug befestigbar ist, wobei die Befestigungsmittel eine auf ein Ende der Achse aufsteckbare Buchse und wenigstens ein Ringelement aufweisen, das in einer zwischen Außenumfang der Achse und Innenumfang der Buchse im Bereich des betreffenden Achsenendes ausgebildeten Aufnahme einführbar ist. Vorzugsweise umfasst die Befestigungsanordnung wenigstens ein weiteres, oben bereits für das Fahrzeug beschriebenes Merkmal, das auf die Achse oder/und die Befestigungsanordnung bezogen ist.

Die Erfindung wird nachfolgend unter Bezugnahme auf die Figuren anhand einer beispielhaften, nicht einschränkenden Ausführungsform beschrieben.
- Fig. 1: ist eine perspektivische Darstellung eines Flurförderzeugs von schräg oben.
- Fig. 2: ist eine vergrößerte, perspektivische Teilansicht auf ein vorderes linkes Laufrad des Flurförderzeugs der Fig. 1 von außen.
- Fig. 3: ist eine vergrößerte, perspektivische Teilansicht auf das vordere linke Laufrad von innen.
- Fig. 4: ist eine Querschnittsdarstellung entsprechend der Schnittlinie IV-IV der Fig. 2.
- Fig. 5: ist eine Vergrößerung des Bereichs V der Fig. 4.
- Fig. 6: ist eine perspektivische Explosionsdarstellung einer Befestigungsanordnung am Beispiel eines vorderen rechten Laufrades des Flurförderzeugs.
- Fig. 7: ist eine perspektivische Darstellung einer Achse.
- Fig. 8: ist eine perspektivische Ansicht einer Buchse.
- Fig. 9: ist eine Draufsicht auf ein in die Buchse der Fig. 8 einsetzbares Ringelement.

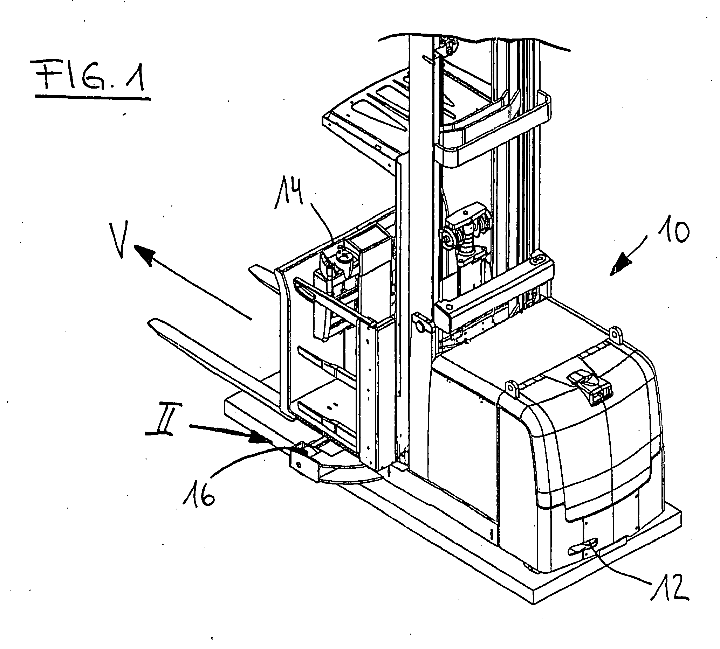

In Fig. 1 ist ein Flurförderzeug in Form eines Kommissionierers 10 dargestellt, der in seinem hinteren Bereich ein zentrales lenkbares Antriebsrad 12 umfasst. Unterhalb und seitlich einer Fahrerkabine 14 weist das Flurförderzeug 10 nicht angetriebene Laufrollen 16 auf, von denen in der Fig. 1 nur das linke Laufrad bezogen auf eine Vorwärtsfahrtrichtung V dargestellt ist.

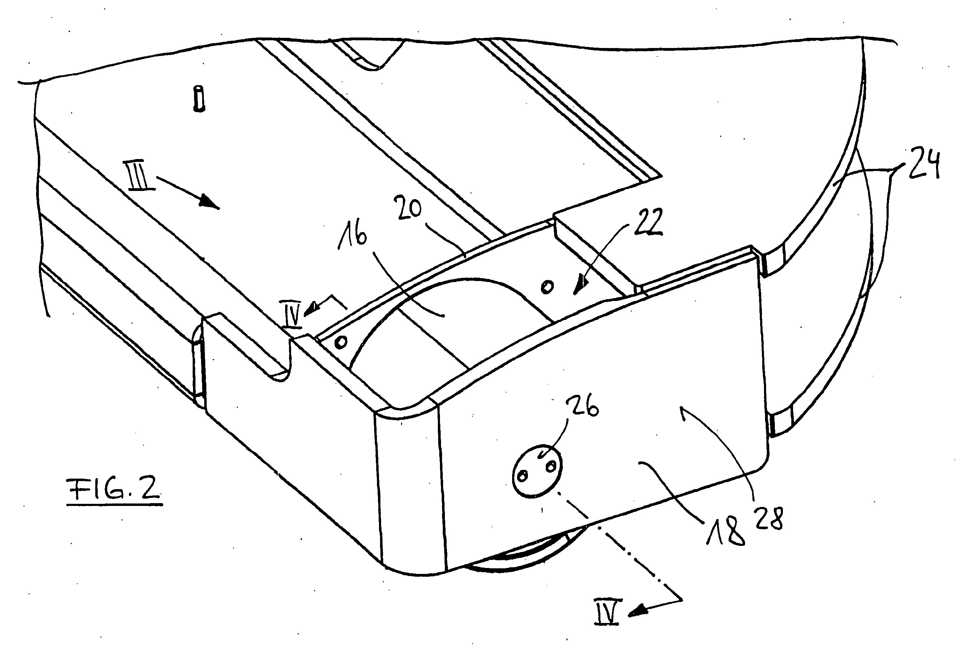

Fig. 2 zeigt eine vergrößerte Darstellung des Laufrads 16 entsprechend dem Pfeil II der Fig. 1. Aus dieser schematischen Perspektivansicht ist ersichtlich, dass das Laufrad 16 zwischen einem äußeren Rahmenabschnitt 18 und einem inneren Rahmenabschnitt 20 aufgenommen ist, wobei zwischen den beiden Rahmenabschnitten 18, 20 ein Zwischenraum 22 ausgebildet ist. Die beiden Rahmenabschnitte 18, 20 sind in ihrem hinteren Bereich mit weiteren Fahrzeugrahmenbauteilen 24 verbunden, auf die jedoch nicht näher eingegangen wird. Aus der Fig. 2 ist ferner eine äußere Stirnfläche 26 einer durch den äußeren Rahmenabschnitt 18, das Laufrad 16 und den inneren Rahmenabschnitt 20 hindurchgesteckten Achse des Laufrads ersichtlich. Dabei bilden die Außenfläche 28 des äußeren Rahmenabschnitts 18 und die äußere Stirnfläche 26 der Achse eine glatte Außenkontur ohne vorstehende Bauteile.

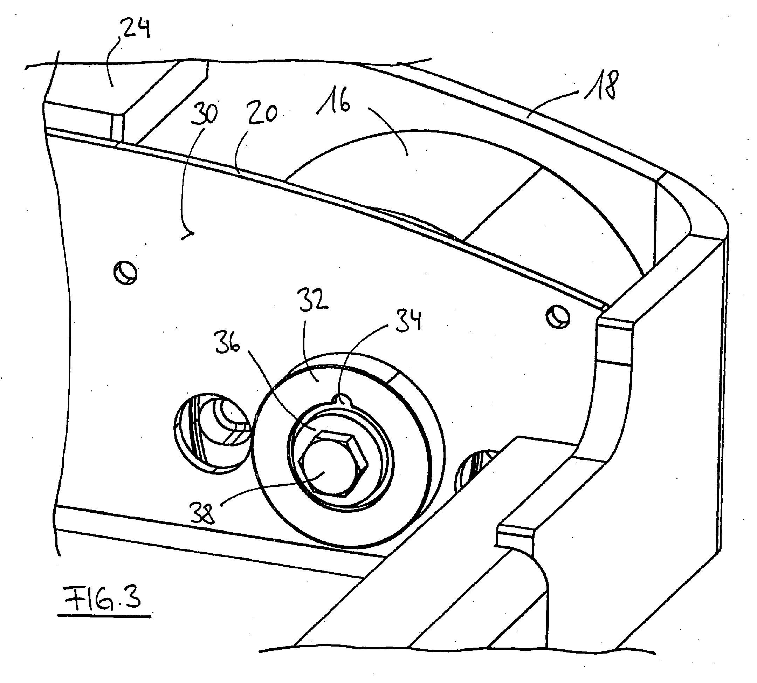

Fig. 3 ist eine schematische Perspektivdarstellung in vergrößertem Maßstab entsprechend dem Pfeil III der Fig. 2. Es ist die innere Fläche 30 des inneren Rahmenabschnitts 20 ersichtlich, an der die Radachse mittels einer Buchse 32, mehreren Ringelementen bzw. Ausgleichsscheiben 34, einer Druckscheibe 36 und einer Schraube 38 abgestützt und befestigt ist. Aus der Zusammenschau von Fig. 2 und Fig. 3 wird klar, dass die Verschraubung der Achse des Laufrads 16 nur auf der Innenseite des Flurförderzeugs bzw. des inneren Rahmenabschnitts 20 erfolgt. Diese Stelle ist bei der Montage des Laufrads am Flurförderzeug sehr gut zugänglich, was die Montage insgesamt vereinfacht.

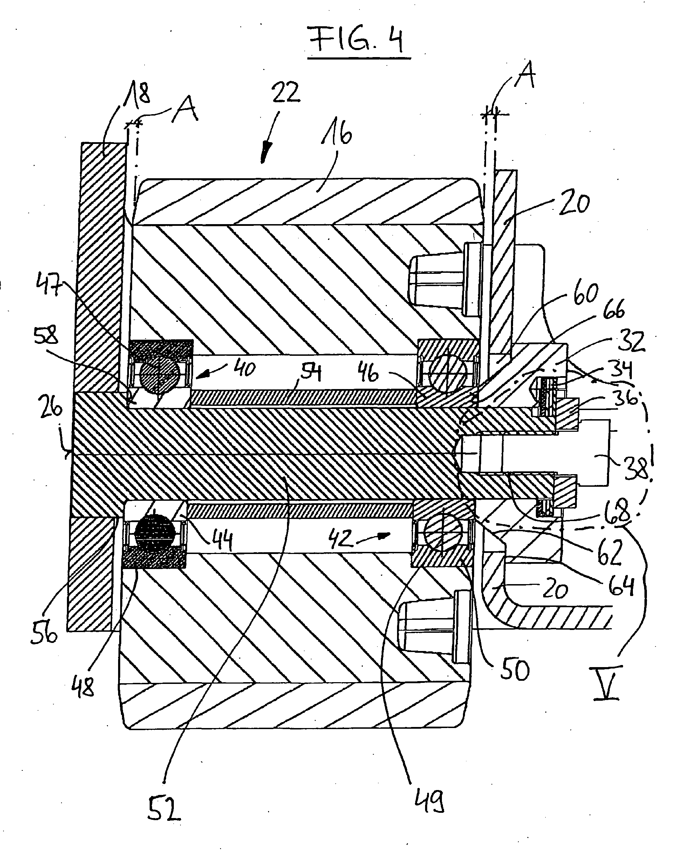

Der detaillierte Aufbau der Befestigungsanordnung für die Befestigung des Laufrads 16 zwischen den beiden Rahmenabschnitten 18, 20 bzw. am Flurförderzeug 10 wird aus der Querschnittsdarstellung der Fig. 4 ersichtlich, welche einen Schnitt entsprechend der Linie IV-IV der Fig. 2 darstellt. Das Laufrad 16 ist zwischen dem äußeren Rahmenabschnitt 18 und dem inneren Rahmenabschnitt 20 angeordnet, wobei es zu jedem Rahmenabschnitt 18, 20 einen axialen Abstand A aufweist, so dass das Laufrad 16 nicht an den Rahmenabschnitten 18, 20 reibt. Die jeweiligen Abstände zum Rahmenabschnitt 18, 20 sind hier zwar mit dem gleichen Buchstaben A bezeichnet, was aber nicht bedeutet, dass diese Abstände zwangsweise identisch sein müssen. Es ist aufgrund von Fertigungstoleranzen oder konstruktionsbedingt möglich, dass diese Abstände unterschiedlich sind.

Das Laufrad 16 weist ein äußeres Kugellager 40 und ein inneres Kugellager 42 auf mit jeweils einer inneren Lagerschale 44 bzw. 46, einer äußeren Lagerschale 48 bzw. 50 und zwischen diesen aufgenommenen Kugeln 47 bzw. 49. Zwischen den auf der Achse 52 aufliegenden inneren Lagerschalen 44 und 46 erstreckt sich in axialer Richtung eine Distanzbuchse 54:

Die Achse 52 weist an ihrem äußeren Ende einen radialen Vorsprung 56 auf, an dessen radialer Ringfläche 58 die innere Lagerschale 44 des äußeren Kugellagers 40 anliegt. Der radiale Vorsprung 56 weist in axialer Richtung eine Ausdehnung auf, die größer ist als die axiale Dicke des Rahmenabschnitts 18, so dass aufgrund des Vorstehens des radialen Vorsprungs 56 in den Zwischenraum 22 der Abstand A zwischen dem Laufrad 16 und dem äußeren Rahmenabschnitt 18 gebildet wird. Die Achse 52 erstreckt sich von ihrem stirnseitigen Ende 26 durch den Zwischenraum 22, das Laufrad 16 und den inneren Rahmenabschnitt 20 hindurch. Der innere Rahmenabschnitt 20 weist eine Öffnung 60 auf, die von einem konischen Abschnitt 62 der Buchse 32 durchsetzt ist. Dabei stützt sich die Buchse 32 in axialer Richtung über einen sich an den konischen Abschnitt 62 anschließenden Ringabschnitt 64 am Rahmenabschnitt 20 ab. Die konische Ausgestaltung der Buchse 32 ermöglicht es, dass das innere Kugellager 42 nur mit seiner inneren Lagerschale 46 an der radseitigen Stirnfläche 66 der Buchse 32 anliegt. Der Ringabschnitt 64 ist mit dem Rahmenabschnitt 20 verschweißt, so dass die Buchse 32 gegen Axial- und Drehbewegungen gesichert ist.

Das Laufrad 16 bzw. dessen Radlageranordnung 40, 42 ist somit zwischen dem radialen Vorsprung 56 der Achse 52 und der Buchse 32 aufgenommen.

Um das Laufrad 16 im Zwischenraum 22 zwischen den beiden Rahmenabschnitten 18, 20 in axialer Richtung spielfrei zu lagern, wird die Buchse 32 mittels der in die Achse 52 eingeführten Schraube 38 gegen die innere Lagerschale 46 des Kugellagers 42 verspannt, wobei die durch die Schraube 38 aufgebrachten Kräfte durch die Druckscheibe 36 und die Ringelemente 34 auf die Buchse 32 übertragen werden und über die Distanzbuchse 54, die innere Lagerschale 44 des Kugellagers 40 und den radialen Vorsprung 56 der Achse 52 abgestützt werden. Auf diese Weise ist das Laufrad 16 zwischen dem Vorsprung 56 der Achse 52 und der Buchse 32 axial spielfrei eingespannt. Die Schraube 38 ist in eine im Ausführungsbeispiel konzentrische Bohrung 68 in die Achse 52 eingeschraubt, wobei es auch denkbar ist, anders angeordnete bzw. ausgestaltete Schraubverbindungen vorzusehen.

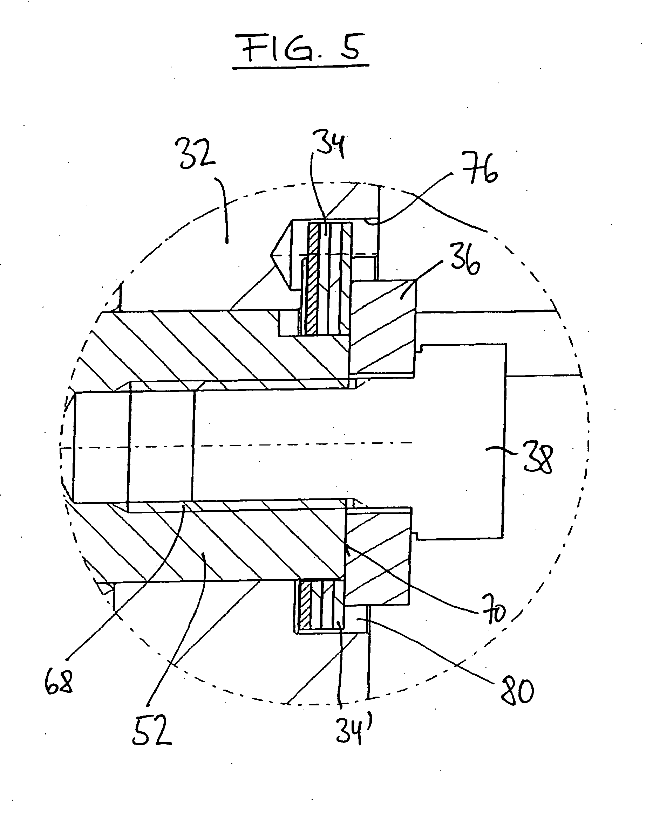

Eine vergrößerte Querschnittsdarstellung des Befestigungsbereichs zwischen Achse 52 und Buchse 32 ist aus der Fig. 5 ersichtlich. Aus dieser Darstellung geht hervor, dass die Ringscheiben 34 in axialer Richtung bündig sind mit einer ringförmigen Stirnfläche 70 der Achse 52, so dass die Druckscheibe 36 sowohl auf dieser Stirnfläche 70 als auch auf einem der Ringelemente 34' aufliegt. Eine derartige bündige Anlage zwischen Ringelementen 34, Achse 52 und Druckscheibe 36 stellt einen möglichen Fall dar. Aufgrund von Fertigungstoleranzen ist es allerdings häufig so, dass das Ringelement 34' in axialer Richtung zum Druckring 36 hin über die Stirnfläche 70 der Achse 52 vorsteht, so dass der Druckring 36 die Stirnfläche 70 der Achse 52 nicht beaufschlagt. Ein derart gebildeter kleiner Abstand zwischen dem Druckring 36 und der Stirnfläche 70 der Achse 52 beeinträchtigt die axiale Festlegung der Achse 52 allerdings nicht, da sie über den Formschluss Schraube 38, Druckscheibe 36, Ringelemente 34 und am Rahmenabschnitt 20 befestigte Buchse 32 axial fixiert ist, so dass eine axiale Beaufschlagung zwischen Druckring 36 und Achse 52 nicht erforderlich ist.

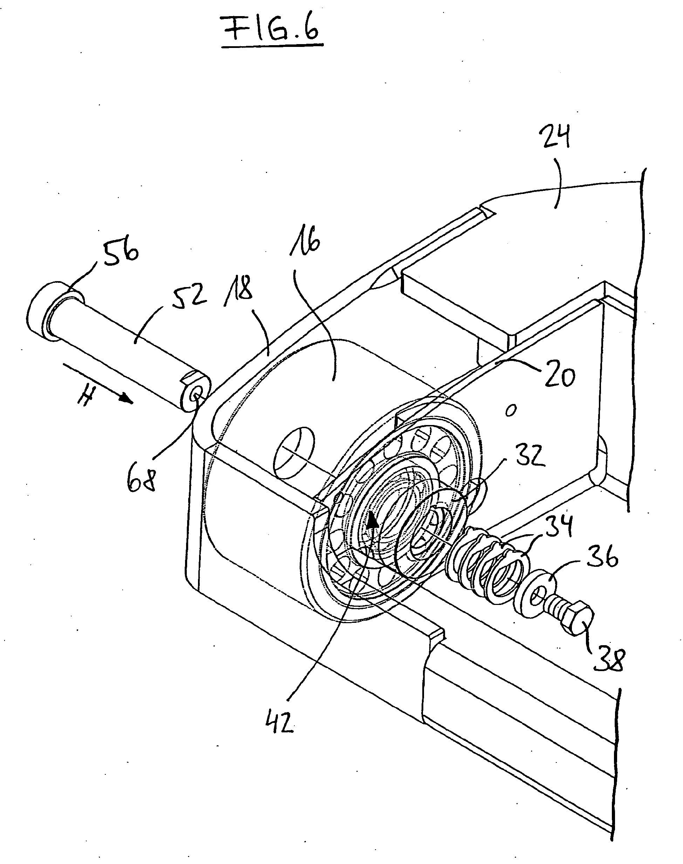

Fig. 6 zeigt die beschriebene Befestigungsanordnung als Explosionsdarstellung, diesmal für das rechte Laufrad 16. Der Einfachheit halber wurden auch in dieser Figur die gleichen Bezugszeichen verwendet. Bei der Montage des Laufrads 16 am Kommissionierer 10 wird zuerst das Laufrad 16 zwischen die beiden Rahmenabschnitt 18, 20 eingefügt, bis die inneren Lagerschalen 40, 46 im Wesentlichen mit den Öffnungen in den Rahmenabschnitten 18, 20 fluchten, so dass die Achse 52 von der Außenseite her durch das Laufrad 16 und die bereits mit dem Rahmenabschnitt 20 verschweißte Buchse 32 hindurchgesteckt werden kann (Richtung H). Das Laufrad 16 ist dann zu Montagezwecken bereits ausreichend gesichert und es können der Reihe nach eine zur axial spielfreien Fixierung des Rads 16 erforderliche Anzahl von Ringelementen 34, die Druckscheibe 36 und die Schraube 38 von der Innenseite her auf die Achse 52 aufgeschoben bzw. in diese hineingeschraubt werden.

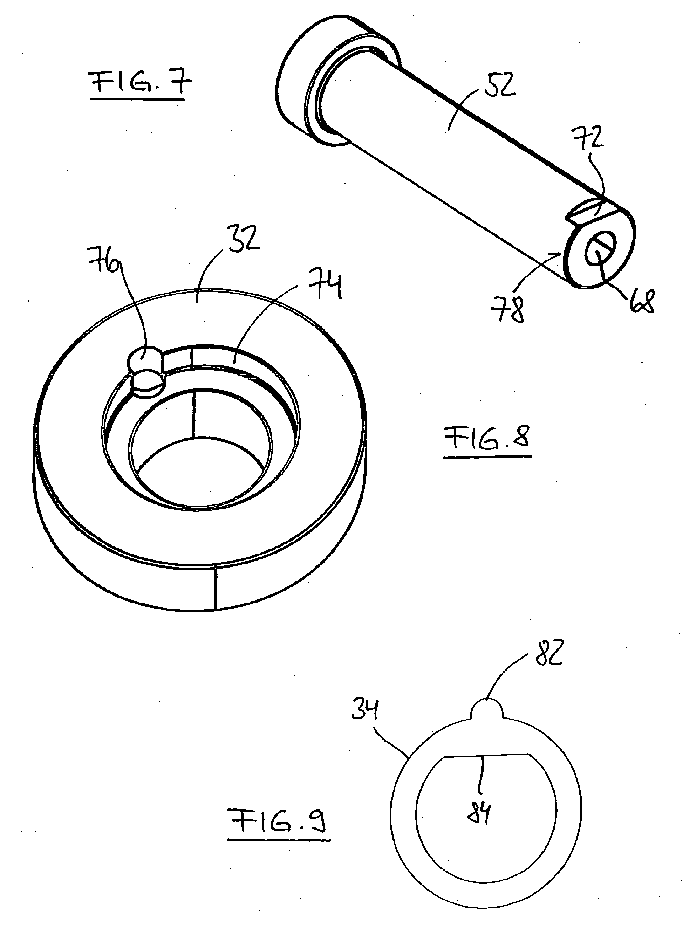

Wie bereits einleitend erwähnt worden ist, muss die Achse 52 nicht nur axial fixiert sein, sondern es muss auch verhindert werden, dass sich die Achse 52 relativ zum Fahrzeugrahmen verdrehen kann. Zu diesem Zweck weist die Achse 52 an ihrem buchsenseitigen Ende einen abgeflachten, vorzugsweise ebenen Außenumfangsabschnitt 72 auf (Fig. 7), und die Buchse 32 weist eine stufenförmige, radiale Aufweitung 74 auf (Fig. 8), in der eine radial nach außen ausgebildete Ausnehmung 76 ausgebildet ist. Wenn die Achse 52 in die Buchse 32 eingeführt ist, bildet sich zwischen der radialen Aufweitung 74 und dem Außenumfang 78 der Achse 52 eine ringförmige Aufnahme 80 aus (Fig. 5), in welche die Ringelemente 34 eingesetzt werden.

Damit die Verdrehsicherung der Achse 52 erreicht wird, sind die Ringelemente 34, wie in Fig. 9 dargestellt, komplementär zum Innenumfang der Buchse 32 und komplementär zum Außenumfang der Achse 52 ausgebildet, wobei das Ringelement 34 an seinem Außenumfang einen radialen Vorsprung 82 aufweist, der in Eingriff mit der radialen Ausnehmung 76 ist, und wobei es an seinem Innenumfang einen abgeflachten Drehsicherungsabschnitt 84 aufweist, der am abgeflachten Außenumfangsabschnitt 52 der Achse anliegt. Auf diese Weise dienen die Ringelemente 34 nicht nur zum Ausgleichen von Fertigungstoleranzen zur axial spielfreien Lagerung des Laufrads 16, sondern sie ermöglichen gleichzeitig die drehfeste Abstützung der Achse 52 bezüglich der Buchse 32 bzw. bezüglich der Rahmenabschnitte 18, 20. Der Spielausgleich mittels der Ringelemente 34 ist bei der vorgestellten Befestigungsanordnung in einen leicht zugänglichen Bereich verlagert und es ist besonders vorteilhaft, dass die Ringelemente 34 nur von einer Seite auf die Achse 52 aufgeschoben werden müssen. Der Abstand A zwischen dem Laufrad 16 und den Rahmenabschnitten 18, 20 wird durch die geeignete Dimensionierung des radialen Vorsprungs 56 der Achse 52 und der Buchse 32 erreicht, so dass zwischen den Rahmenabschnitten 18, 20 und dem Laufrad 16 keine weiteren Ausgleichsscheiben auf die Achse 52 aufgeschoben werden müssen. Dies vereinfacht die Montage eines Laufrads mittels der Steckachse 52 deutlich.

Zusammenfassend wird also das Laufrad 16 axial fixiert durch den Formschluss Buchse 32, innere Lagerschale 46 des Kugellagers 42, Distanzbuchse 54, innere Lagerschale 44 des Kugellagers 40 sowie den radialen Vorsprung 56 der Achse 52. Die Achse 52 wird axial fixiert über den Formschluss Schraube 38, Druckscheibe 36, Ringelemente bzw. Ausgleichsscheiben 34 und Buchse 32. Über die Ausgleichsscheiben 34 können Fertigungstoleranzen ausgeglichen werden und die Lagerung spielfrei eingestellt werden. Ferner wird durch den Formschluss am buchsenseitigen Ende der Achse 52 zwischen der Achse 52, den Ringelementen bzw. Ausgleichsscheiben 34 und der Buchse 32 eine Drehung der Achse 52 verhindert. Es ergibt sich insgesamt eine aus wenigen Komponenten bestehende Befestigungsanordnung für ein Laufrad, deren Montage einfach und schnell erfolgen kann.

## Patentansprüche

1. Fahrzeug, insbesondere Flurförderzeug (10), mit wenigstens einem nicht angetriebenen Laufrad (16), das zwischen einem äußeren und einem inneren Rahmenabschnitt (18, 20) des Fahrzeugs um eine bezüglich dieser Rahmenabschnitte (18, 20) abgestützte Achse (52) drehbar ist, wobei die Achse bezüglich der Rahmenabschnitte (18, 20) drehfest und axial unverschieblich angeordnet ist, und wobei das Laufrad (16) eine Radlageranordnung (40, 42, 54) aufweist, die im Wesentlichen spielfrei auf der Achse (52) derart angeordnet ist, dass das Laufrad (16) mit einem jeweiligen Abstand (A) in axialer Richtung zu den Rahmenabschnitten (18, 20) angeordnet ist, **dadurch gekennzeichnet, dass** die Radlageranordnung (40, 42, 54) zwischen einem an einem Ende (26) der Achse (52) ausgebildeten Radialvorsprung (56) und einer am anderen Ende (70) der Achse (52) angebrachten Befestigungsanordnung eingespannt ist, die eine um das anderen Ende der Achse (52) konzentrisch angeordnete Buchse (32) umfasst, und wobei die Achse (52) mittels der Buchse (32), der Radlageranordnung (40, 42, 54) und dem Radialvorsprung (56) in axialer Richtung bezüglich der Rahmenabschnitte (18, 20) unverschieblich gehalten ist.

2. Fahrzeug nach Anspruch 1, wobei die Buchse (32) einen konischen Abschnitt (62) aufweist, der zur axialen Abstützung der Radlageranordnung (40, 42, 54) eine Öffnung (60) des Rahmenabschnittes (20) durchsetzt, und wobei sie sich ferner an dem Rahmenabschnitt (20) axial abstützt.

3. Fahrzeug nach Anspruch 1 oder 2, wobei die Buchse (32) im Bereich des anderen, buchsenseitigen Endes der Achse (52) eine stufenförmige radiale Aufweitung (74) umfasst, derart, dass im Bereich der Aufweitung (74) zwischen dem Außenumfang (78) der Achse (52) und dem Innenumfang der Buchse (32) eine im Wesentlichen ringförmige Aufnahme (80) gebildet ist.

4. Fahrzeug nach Anspruch 3, wobei die Buchse (32) an ihrem Innenumfang im Bereich der Aufweitung (74) wenigstens eine radial nach außen ausgebildete Ausnehmung (76) aufweist.

5. Fahrzeug nach einem der vorhergehenden Ansprüche, wobei die Buchse (32) mit dem Rahmenabschnitt (20) fest verbunden, insbesondere verschweißt ist.

6. Fahrzeug nach einem der vorhergehenden Ansprüche, wobei die Achse (52) an ihrem buchsenseitigen Ende (70) wenigstens einen abgeflachten, vorzugsweise ebenen Außenumfangsabschnitt (72) aufweist.

7. Fahrzeug nach Anspruch 3 und 6, wobei der abgeflachte Außenumfangsabschnitt (72) der Achse (52) im Bereich der Aufweitung (74) der Buchse (32) liegt.

8. Fahrzeug nach Anspruch 7, wobei die Befestigungsanordnung wenigstens ein zum Innenumfang der Buchse (32) und zum Außenumfang (78) der Achse (52) komplementäres scheibenförmiges Ringelement (34) aufweist, das in die ringförmige Aufnahme (80) eingesetzt ist.

9. Fahrzeug nach Anspruch 4 und 8, wobei das Ringelement (34) an seinem Außenumfang wenigstens einen radialen Vorsprung (82) aufweist, der in Eingriff mit der wenigstens einen radialen Ausnehmung (76) am Innenumfang der Buchse (32) ist, und wobei es an seinem Innenumfang einen abgeflachten Drehsicherungsabschnitt (84) aufweist, der am abgeflachten, vorzugsweise ebenen Außenumfangsabschnitt (72) der Achse (52) anliegt.

10. Fahrzeug nach einem der vorhergehenden Ansprüche, wobei die Buchse (32) und die Achse (52) mittels einer Schraubverbindung (38) der Befestigungsanordnung aneinander befestigt sind.

11. Fahrzeug nach Anspruch 10 und 8, wobei die Schraubverbindung eine die Achse (52) mit der Buchse (32) und dem wenigstens einen Ringelement (34) verbindende Schraube (38) umfasst, die in eine vorzugsweise konzentrische Axialbohrung (68) am buchsenseitigen Ende (70) der Achse (52) eingeführt ist.

12. Fahrzeug nach Anspruch 11, wobei die Befestigungsanordnung eine Druckscheibe (36) umfasst, die axial zwischen der Buchse (32) und dem Schraubenkopf der Schraube (38) angeordnet ist, und durch welche die axiale Abstützung des wenigstens einen Ringelements (34) erfolgt.

13. Fahrzeug nach einem der vorhergehenden Ansprüche, wobei die Achse (52) mit ihrem radialen Vorsprung (56) in einer korrespondierenden Öffnung in einem der Rahmenabschnitte (18) aufgenommen ist.

14. Fahrzeug nach Anspruch 13, wobei der radiale Vorsprung (56) mit der vom Laufrad (16) abgewandten Außenseite (28) des betreffenden, vorzugsweise äußeren Rahmenabschnitts (18) im Wesentlichen bündig ist und diese zusammen eine glatte Außenkontur des Fahrzeugs (10) bilden.

15. Fahrzeug nach einem der vorhergehenden Ansprüche, wobei die Radlageranordnung ein erstes, am radialen Vorsprung (56) der Achse (52) anliegendes Radlager (40) und ein zweites, an der Buchse (32) anliegendes Radlager (42) aufweist, zwischen denen in axialer Richtung eine konzentrische Distanzbuchse (54) angeordnet ist.

16. Befestigungsanordnung für ein nicht angetriebenes Laufrad (16) an einem Fahrzeug (10), vorzugsweise Flurförderzeug, wobei die Befestigungsanordnung eine in eine Radlageranordnung (40, 42, 54) des Laufrads (16) einführbare Achse (52) und Befestigungsmittel umfasst, durch welche die Achse (52) axial unverschieblich am Fahrzeug (10) befestigbar ist, wobei die Befestigungsmittel eine auf ein Ende (70) der Achse (52) aufsteckbare Buchse (32) und wenigstens ein Ringelement (34) aufweisen, das in einer zwischen Außenumfang (78) der Achse (52) und Innenumfang der Buchse (32) im Bereich des betreffenden Achsenendes (70) ausgebildeten Aufnahme (80) einführbar ist.

17. Befestigungsanordnung nach Anspruch 16 mit wenigstens einem weiteren auf die Achse (52) oder/und die Befestigungsanordnung bezogenen Merkmal der Ansprüche 1 bis 14.

## Claims

1. A vehicle, in particular a forklift truck (10), having at least one non-driven wheel (16) which, between an outer and an inner frame section (18,20) of the vehicle, can rotate about an axle (52) supported with respect to these frame sections (18,20), wherein the axle is arranged to be fixed in rotation and axially non-displaceable with respect to the frame sections (18,20), and wherein the wheel (16) has a wheel bearing assembly (40,42,54) which is arranged substantially without play on the axle (52) in such a way that the wheel (16) is arranged at a respective distance (A) in the axial direction from the frame sections (18,20), **characterised in that** the wheel bearing assembly (40,42,54) is clamped between a radial projection (56) formed at one end (26) of the axle (52) and a fastening assembly mounted on the other end (70) of the axle (52), which fastening assembly comprises a bush (32) arranged concentrically around the other end of the axle (52), and wherein the axle (52) is held non-displaceably in the axial direction with respect to the frame sections (18,20) by means of the bush (32), the wheel bearing assembly (40,42,54) and the radial projection (56).

2. A vehicle according to Claim 1, wherein the bush (32) has a conical section (62) which, for the axial support of the wheel bearing assembly (40,42,54), passes through an opening (60) in the frame section (20), and wherein the bush is further supported axially on the frame section (20).

3. A vehicle according to Claim 1 or 2, wherein, in the vicinity of the other end of the axle (52) on the bush side, the bush (32) has a step-like radial widening (74) such that in the vicinity of the widening (74), between the outer circumference (78) of the axle (52) and the inner circumference of the bush (32), a substantially annular receptacle (80) is formed.

4. A vehicle according to Claim 3, wherein the bush (32) has at least one recess (76) formed radially outwards on its inner circumference in the vicinity of the widening (74).

5. A vehicle according to any one of the preceding Claims, wherein the bush (32) is securely connected, in particular welded, to the frame section (20).

6. A vehicle according to any one of the preceding Claims, wherein at its end (70) on the bush side the axle (52) has at least one flattened, preferably flat, outer circumferential section (72).

7. A vehicle according to Claims 3 and 6, wherein the flattened outer circumferential section (72) of the axle (52) is situated in the vicinity of the widening (74) of the bush (32).

8. A vehicle according to Claim 7, wherein the fastening assembly has at least one disc-like ring element (34) which is complementary to the inner circumference of the bush (32) and to the outer circumference (78) of the axle (52) and which is inserted into the annular receptacle (80).

9. A vehicle according to Claims 4 and 8, wherein the ring element (34) has at least one radial projection (82) on its outer circumference, which is in engagement with the at least one radial recess (76) on the inner circumference of the bush (32), and wherein it has on its inner circumference a flattened anti-rotational section (84) which bears on the flattened, preferably flat, outer circumferential section (72) of the axle (52).

10. A vehicle according to any one of the preceding Claims, wherein the bush (32) and the axle (52) are fastened to each other by means of a screw connection (38) of the fastening assembly.

11. A vehicle according to Claims 10 and 8, wherein the screw connection comprises a screw (38) connecting the axle (52) to the bush (32) and the at least one ring element (34), which screw is inserted into a preferably concentric axial hole (68) at the end (70) of the axle (52) on the bush side.

12. A vehicle according to Claim 11, wherein the fastening assembly comprises a thrust washer (36) which is arranged axially between the bush (32) and the screw head of the screw (38) and which provides the axial support for the at least one ring element (34).

13. A vehicle according to any one of the preceding Claims, wherein the axle (52) is accommodated with its radial projection (56) in a corresponding opening in one of the frame sections (18).

14. A vehicle according to Claim 13, wherein the radial projection (56) is substantially flush with the outer side (28) of the relevant, preferably outer, frame section (18) facing away from the wheel (16), and together they forming a smooth outer contour of the vehicle (10).

15. A vehicle according to any one of the preceding Claims, wherein the wheel bearing assembly has a first wheel bearing (40) abutting against the radial projection (56) of the axle (52) and a second wheel bearing (42) abutting against the bush (32), between which a concentric spacer bush (54) is arranged in the axial direction.

16. A fastening assembly for a non-driven wheel (16) on a vehicle (10), preferably a forklift truck, wherein the fastening assembly comprises an axle (52), which can be introduced into a wheel bearing assembly (40,42,54) of the wheel (16), and fastening means by which the axle (52) can be fastened to the vehicle (10) so that it is axially non-displaceable, wherein the fastening means has a bush (32), which can be fitted on to one end (70) of the axle (52), and at least one ring element (34) which can be introduced into a receptacle (80) formed between the outer circumference (78) of the axle (52) and the inner circumference of the bush (32) in the vicinity of the relevant axle end (70).

17. A fastening assembly according to Claim 16, with at least one further feature of Claims 1 to 14 relating to the axles (52) and/or the fastening assembly.

## Revendications

1. Véhicule, notamment chariot de manutention (10), doté d'au moins une roue porteuse non entraînée (16), qui peut tourner entre une partie extérieure et une partie intérieure de châssis (18, 20) du véhicule autour d'un axe (52) supporté par rapport à ces parties de châssis (18, 20), dans lequel l'axe est calé en rotation et immobilisé axialement par rapport aux parties de châssis (18, 20), et dans lequel la roue porteuse (16) présente un agencement de palier de roue (40, 42, 54) qui est disposé essentiellement sans jeu sur l'axe (52), de telle manière que la roue porteuse (16) soit disposée avec une distance respective (A) en direction axiale par rapport aux parties de châssis (18, 20), **caractérisé en ce que** l'agencement de palier de roue (40, 42, 54) est encastré entre un épaulement radial (56) formé sur une extrémité (26) de l'axe (52) et un agencement de fixation monté sur l'autre extrémité (70) de l'axe (52), qui comprend une douille (32) disposée de façon concentrique autour de l'autre extrémité de l'axe (52), et dans lequel l'axe (52) est immobilisé en direction axiale par rapport aux parties de châssis (18, 20) au moyen de la douille (32), de l'agencement de palier de roue (40, 42, 54) et de l'épaulement radial (56).

2. Véhicule selon la revendication 1, dans lequel la douille (32) présente une partie conique (62), qui traverse une ouverture (60) de la partie de châssis (20) en vue de l'appui axial de l'agencement de palier de roue (40, 42, 54), et dans lequel elle prend en outre appui axialement sur la partie de châssis (20).

3. Véhicule selon la revendication 1 ou 2, dans lequel la douille (32) comprend, dans la région de l'autre extrémité de l'axe (52) côté douille, un élargissement radial étagé (74), de telle manière qu'un logement essentiellement annulaire (80) soit formé dans la région de l'élargissement (74) entre la périphérie extérieure (78) de l'axe (52) et la périphérie intérieure de la douille (32).

4. Véhicule selon la revendication 3, dans lequel la douille (32) présente, sur sa périphérie intérieure dans la région de l'élargissement (74), au moins un évidement (76) formé radialement vers l'extérieur.

5. Véhicule selon l'une quelconque des revendications précédentes, dans lequel la douille (32) est solidarisée, notamment est soudée, avec la partie de châssis (20).

6. Véhicule selon l'une quelconque des revendications précédentes, dans lequel l'axe (52) présente, à son extrémité côté douille (70), au moins une partie de périphérie extérieure (72) aplatie, de préférence plane.

7. Véhicule selon la revendication 3 et 6, dans lequel la partie de périphérie extérieure aplatie (72) de l'axe (52) est située dans la région de l'élargissement (74) de la douille (32).

8. Véhicule selon la revendication 7, dans lequel l'agencement de fixation présente au moins un élément annulaire en forme de rondelle (34) complémentaire à la périphérie intérieure de la douille (32) et à la périphérie extérieure (78) de l'axe (52), qui est inséré dans le logement annulaire (80).

9. Véhicule selon la revendication 4 et 8, dans lequel l'élément annulaire (34) présente à sa périphérie extérieure au moins un épaulement radial (82), qui vient en prise avec ledit au moins un évidement radial (76) à la périphérie intérieure de la douille (32), et dans lequel il présente à sa périphérie intérieure une partie aplatie de protection contre la rotation (84), qui s'applique sur la partie de périphérie extérieure aplatie, de préférence plane (72) de l'axe (52).

10. Véhicule selon l'une quelconque des revendications précédentes, dans lequel la douille (32) et l'axe (52) sont fixés l'un à l'autre au moyen d'un assemblage vissé (38) de l'agencement de fixation.

11. Véhicule selon la revendication 10 et 8, dans lequel l'assemblage vissé comprend une vis (38) reliant l'axe (52) à la douille (32) et audit au moins un élément annulaire (34), et qui est introduite dans un alésage axial (68) de préférence concentrique à l'extrémité côté douille (70) de l'axe (52).

12. Véhicule selon la revendication 11, dans lequel l'agencement de fixation comprend une rondelle de pression (36), qui est disposée axialement entre la douille (32) et la tête de vis de la vis (38), et qui assure l'appui axial dudit au moins un élément annulaire (34).

13. Véhicule selon l'une quelconque des revendications précédentes, dans lequel l'axe (52) est logé avec son épaulement axial (56) dans une ouverture correspondante dans une des parties de châssis (18).

14. Véhicule selon la revendication 13, dans lequel l'épaulement radial (56) est disposé essentiellement à fleur du côté extérieur (28), situé à l'opposé de la roue porteuse (16), de la partie de châssis concernée (18), de préférence extérieure et ceux-ci forment ensemble un contour extérieur lisse du véhicule (10).

15. Véhicule selon l'une quelconque des revendications précédentes, dans lequel l'agencement de palier de roue présente un premier palier de roue (40) appliqué contre l'épaulement radial (56) de l'axe (52) et un deuxième palier de roue (42) appliqué contre la douille (32), entre lesquels une douille d'écartement concentrique (54) est disposée en direction axiale.

16. Agencement de fixation pour une roue porteuse non entraînée (16) dans un véhicule (10), de préférence un chariot de manutention, dans lequel l'agencement de fixation comprend un axe (52) à introduire dans un agencement de palier de roue (40, 42, 54) de la roue porteuse (16) et des moyens de fixation, par lesquels l'axe (52) peut être immobilisé axialement sur le véhicule (10), dans lequel les moyens de fixation présentent une douille (32) à engager sur une extrémité (70) de l'axe (52) et au moins un élément annulaire (34), qui peut être introduit dans un logement (80) formé entre la périphérie extérieure (78) de l'axe (52) et la périphérie intérieure de la douille (32) dans la région de l'extrémité d'axe concernée (70).

17. Agencement de fixation selon la revendication 16, avec au moins une autre caractéristique des revendications 1 à 14 relative à l'axe (52) et/ou à l'agencement de fixation.
